# EUROPEAN PATENT SPECIFICATION

(11) **EP 2 088 069 B1**
(45) Date of publication and mention of the grant of the patent: **02.05.2012**
(21) Application number: 09250271.5
(22) Date of filing: 02.02.2009
(51) Int. Cl.: B62K 11/06, B62K 19/06, B62K 19/30, B62M 6/90

(54) **Body frame for a motorcycle**
Rahmen für ein Motorrad
Cadre de châssis pour une motocyclette

(30) Priority: 05.02.2008 JP 2008025091
(43) Date of publication of application: 12.08.2009
(73) Proprietor: Yamaha Hatsudoki Kabushiki Kaisha, Shizuoka-ken 438-8501 (JP)
(72) Inventor: Onodera, Satoru, Iwata-shi, Shizuoka-ken 438-8501 (JP)
(74) Representative: Schoppe, Fritz

(56) References cited:
- EP-A- 0 469 995
- EP-A- 1 403 177
- JP-A- 2003 182 676
- JP-A- 2006 143 055
- JP-U- 5 034 092
- US-B1- 6 290 017

## Description

### Technical Field

The present invention relates to a body frame for a motorcycle and a motorcycle provided therewith. More particularly, the present invention relates to a body frame for a motorcycle with a space to accommodate a power source and relates to a motorcycle provided therewith.

### Background Art

Conventionally, a variety of battery arrangements have been suggested. For example, JP-U-Hei 05-34092 describes the motorcycle battery arrangement of the type shown in FIGs . 5 and 6. As shown in FIG. 6, in a motorcycle 100 disclosed in JP-U-Hei 05-34092, a body frame 101 includes a right and left pair of main members 102a, 102b. A box member 103 is attached to the main members 102a, 102b. The box member 103 is formed to be hollow. A battery is disposed in the box member 103.

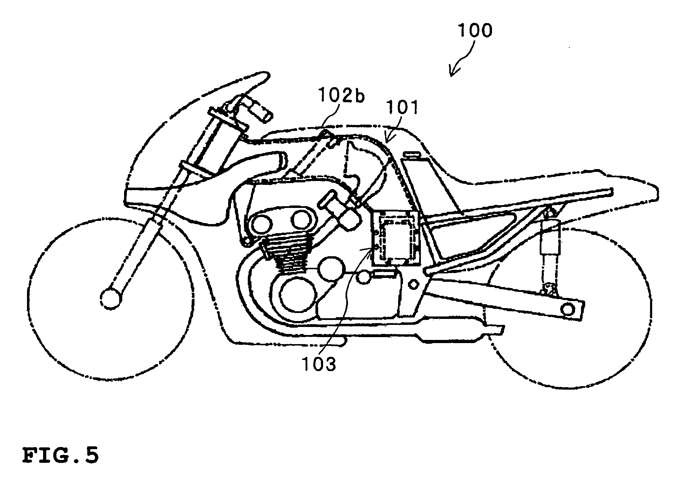

More specifically, as shown in FIG. 5, the box member 103 is of rectangular shape in a side view. The box member 103 is disposed in a manner that an upper surface and a lower surface thereof become horizontal. In the side view, the box member 103 projects forward from the body frame 101.

JP-U-Hei 05-34092 describes that the mass can be concentrated by disposing the box member 103 for housing the battery in a middle portion of the body frame 101 in the longitudinal direction.

In the motorcycle 100, the box member 103 is disposed to bridge the right and left pair of main members 102a, 102b, and the internal space of the box member 103 is effectively used as a mounting space of the battery. Thus, it is possible to simultaneously improve the rigidity of the body frame 101 and allow efficient use of the available space.

However, as shown in FIG. 5, the box member 103 projects forward from the body frame 101 in the motorcycle 100. This possibly leads to interference of the box member 103 with members disposed near the box member 103, such as an engine. In addition, the engine as a vibrating body possibly collides against the box member 103. For this reason, the engine and the like have to be disposed away from a portion of the body frame 101 where the box member 103 is disposed. Consequently, the motorcycle tends to be enlarged.

In view of the above, it is conceivable to reduce the size of the box member 103 so that the box member 103 does not project from the body frame 101. However, if the size of the box member 103 is reduced, the battery housed therein also has to be reduced in size. Accordingly, it becomes difficult to house a high-capacity battery.

The present invention has been made in view of the foregoing problem, and therefore has an object to provide a body frame for a motorcycle that is compact in size yet secures a large mounting space for a battery.

The invention provides for a body frame according to claim 1.

A body frame for a motorcycle according to the present invention includes a steering head pipe, a right and left pair of main members, and a cross member. The main members extend rearward from the steering head pipe. The cross member connects the right and left pair of main members. An internal space for mounting a power source is formed in the cross member. The cross member is configured to follow the main members in a side view.

A motorcycle according to the present invention includes the body frame for a motorcycle according to the present invention.

An embodiment of the present invention can realize a body frame for a motorcycle that is compact in size yet secures a large mounting space for a battery.
Brief Description of the Drawings Embodiments of the invention are described below, by way of example only, with reference to the drawings.
FIG. 1 is a left side view of a motorcycle embodying the present invention.
FIG. 2 is a left side view of a body frame.
FIG. 3 is a plan view of the body frame.
FIG. 4 is a cross sectional view taken along the line IV-IV in FIG. 3.
FIG. 5 is a left side view of the motorcycle disclosed in JP-U-Hei 05-34092.

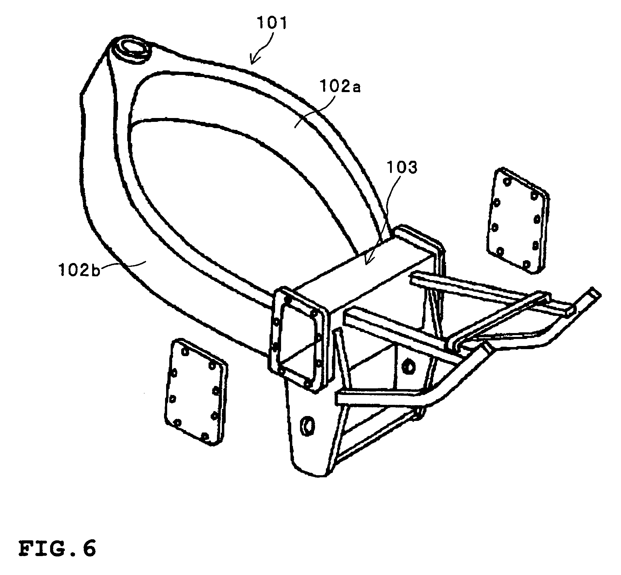

FIG. 6 is a perspective view of the body frame disclosed in JP-U-Hei 05-34092.

### Detailed Description

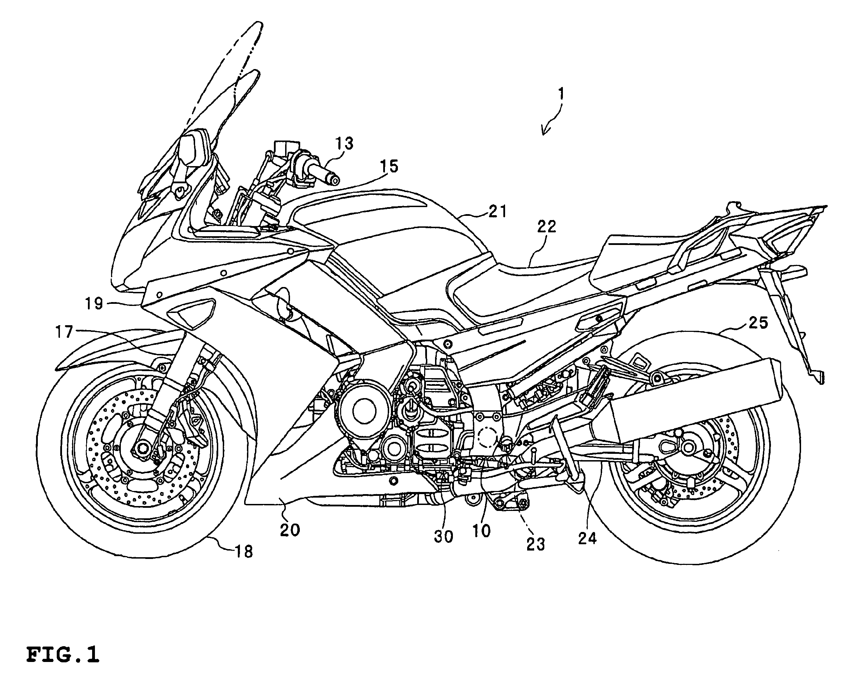

A preferred embodiment of the present invention will hereinafter be described in detail, using a motorcycle 1 shown in FIG. 1. It should be noted however that the following embodiment is merely an example. The present invention is not limited to the following embodiment and variations.

Forward, rear, left, and right directions in the following descriptions denote directions as viewed from a rider seated on a seat 22.

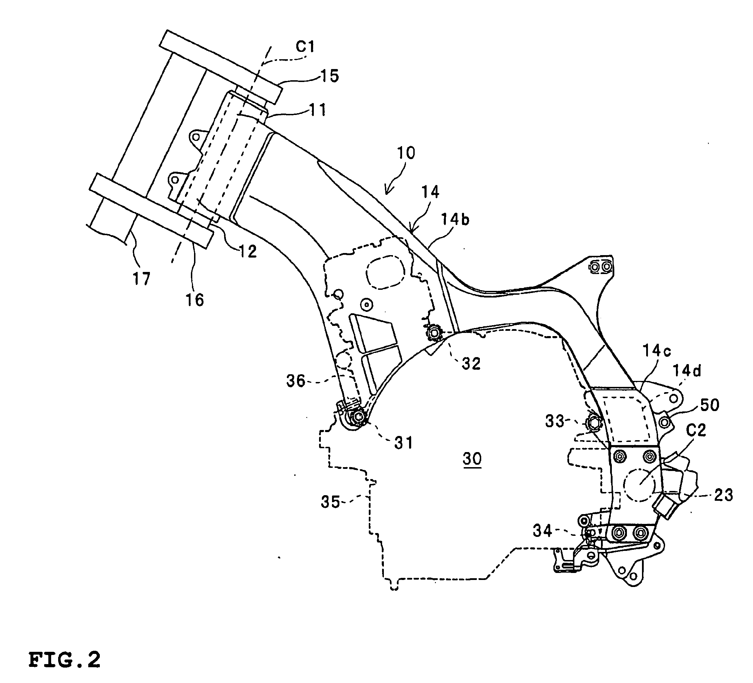

As shown in FIG. 1, the motorcycle 1 includes a body frame 10. As shown in FIG. 2, the body frame 10 includes a main frame 14 and a steering head pipe 11. The steering head pipe 11 is connected to a front end of the main frame 14. A steering shaft 12 is rotatably inserted in the steering head pipe 11. The steering shaft 12 is connected to a handlebar crown 15 at its upper end. As shown in FIG. 1, handlebars 13 are attached to the handlebar crown 15.

As shown in FIG. 2, an under bracket 16 is attached to a lower end of the steering shaft 12. A pair of front forks 17 is attached to the handlebar crown 15 and the under bracket 16. As shown in FIG. 1, a front wheel 18 is rotatably attached to lower ends of the paired front forks 17.

A front cowl 19 is attached to the body frame 10 so as to cover the front side of the body frame 10. Side cowls 20 are also attached to the body frame 10 so as to cover the lateral sides of the body frame 10. A fuel tank 21 is mounted on the body frame 10. The seat 22 is disposed behind the fuel tank 21.

A pivot shaft 23 is attached to the rear end of the body frame 10. The pivot shaft 23 extends in a vehicle width direction. A rear arm 24 is swingably (or, in other words, pivotably) attached to the pivot shaft 23. A rear wheel 25 is rotatably attached to the rear end of the rear arm 24.

As shown in FIGs. 1 and 2, an engine 30 as a driving source is suspended from the body frame 10. More specifically, first to fourth engine suspension shafts 31 to 34 are attached to the body frame 10. The engine 30 is mounted to the body frame 10 by the first to the fourth engine suspension shafts 31 to 34.

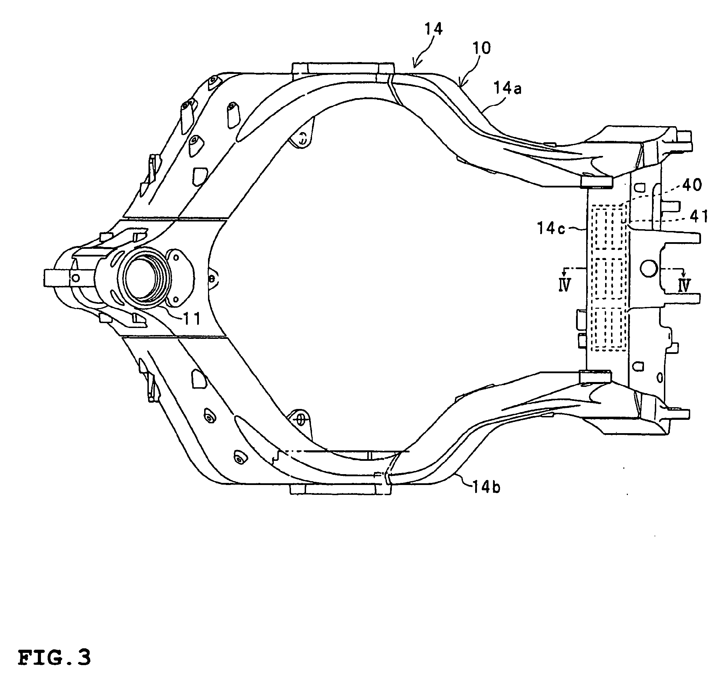

The construction of the main frame 14 according to this embodiment will hereinafter be described in detail with reference to FIGs. 2 and 3. As shown in FIGs. 2 and 3, the main frame 14 includes a right and left pair of main members 14a, 14b, and a cross member 14c. The right-side main member 14a is located on the right side in the vehicle width direction. The left-side main member 14b is located on the left side in the vehicle width direction. The main members 14a, 14b are connected to the steering head pipe 11. The main members 14a, 14b extend obliquely downward to the rear from the steering head pipe 11. More specifically, the right-side main member 14a extends obliquely downward right to the rear from the steering head pipe 11. Meanwhile, the left-side main member 14b extends obliquely downward left to the rear from the steering head pipe 11.

The right-side main member 14a and the left-side main member 14b are connected to each other through the cross member 14c. More specifically, a middle portion of the right-side main member 14a that extends obliquely downward and a middle portion of the left-side main member 14b that extends obliquely downward are connected through the cross member 14c.

The cross member 14c is configured to follow the main members 14a, 14b in a side view. More specifically, the cross member 14c is formed generally in the shape of a parallelogram that extends obliquely downward to the rear in the side view. Therefore, in the side view, the cross member 14c does not project from the main members 14a, 14b in a longitudinal direction.

As shown in FIG. 2, an internal space 14d for mounting a power source is formed in the cross member 14c. The internal space 14d extends in the vehicle width direction. The internal space 14d passes through the cross member 14c. In other words, the cross member 14c is formed generally in the shape of a hollow parallelogram in cross section. As shown in FIG. 2, lids 50 are bolted on both end portions of the cross member 14c in the vehicle width direction. Openings at both ends of the cross member 14c in the vehicle width direction are closed by the lids 50.

The internal space 14d is configured to follow the main members 14a, 14b in the side view. More specifically, the internal space 14d is formed generally in the shape of a parallelogram that extends obliquely downward to the rear in the side view.

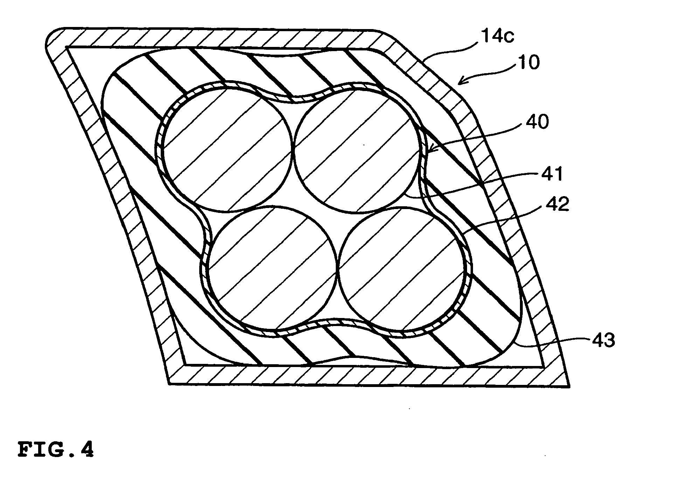

In this embodiment, as shown in FIGs. 3 and 4, a battery assembly 40 is mounted in the internal space 14d. The battery assembly 40 includes a plurality of generally cylindrical batteries 41 and a package 42. The plurality of batteries 41 is disposed in the package 42. The plurality of batteries 41 is bundled together by the package 42. Here, a material of the package 42 is not particularly limited. The package 42 may be made of plastic or rubber, for example.

As shown in FIG. 3, the batteries 41 are aligned in plural rows in the vehicle width direction. As shown in FIG. 4, the plural rows of the batteries are laid one upon the other in a zigzag in the longitudinal direction. In other words, the plural batteries 41 are arranged in a matrix and zigzag in the side view. That is, the batteries 41 are in a so-called delta arrangement in the side view. In other words, in the side view, the batteries 41 are disposed in a manner that centers of the adjacent batteries 41 constitute either an acute triangle or an obtuse triangle. That is, in the side view, the plurality of batteries 41 is arranged so that the centers of the adjacent batteries 41 constitute a triangle that is not a right triangle.

As shown in FIG. 4, the battery assembly 40 is housed in the internal space 14d while being housed in a cylindrical shock absorber 43 with one closed end. Here, a material of the shock absorber 43 is not particularly limited. The shock absorber 43 may be constituted by a sponge, for example.

As described above, in this embodiment, the cross member 14c is configured to follow the main members 14a, 14b in the side view. Due to the above configuration, in the side view, it is possible to increase an area of the cross section of the cross member 14c while the cross member 14c is prevented from projecting from the main members 14a, 14b in the longitudinal direction. Thus, the internal space 14d can be enlarged. Accordingly, a large space for mounting the power source can be secured without enlarging the body frame 10. As a result, it is possible to increase a capacity of the power source that can be mounted in the motorcycle 1.

In addition, the rigidity of the body frame 10 can be improved by thickening the cross member 14c. In other words, by thickening the cross member 14c in the shape that follows the main members 14a, 14b in the side view, it is possible to increase the capacity of the power source that can be mounted in the motorcycle 1 and to improve the rigidity of the vehicle body.

Furthermore, a dead space in the cross member 14c can be effectively utilized as a mounting space for the power source. Therefore, it is possible to reduce the size of a whole space for the components attached to the body frame 10.

The cross member 14c extends in the vehicle width direction. Thus, the mass of the battery assembly 40 can be concentrated in the longitudinal direction. Furthermore, the cross member 14c is disposed near the engine 30 as a heavy object. Accordingly, the battery assembly 40 as a heavy object and the engine 30 can be dispose in the proximity of (i.e proximate to) each other. Consequently, the mass of the motorcycle 1 can be concentrated (i.e. located close together).

In this embodiment, the battery assembly 40 having the plurality of batteries 41 is housed in the internal space 14d. The shape of the battery assembly 40 can easily be changed by changing the arrangement of the plural batteries 41. For this reason, the shape of the battery assembly 40 can be changed in accordance with the shape of the internal space 14d. Thus, the batteries 41 can be effectively disposed in the internal space 14d. Consequently, the capacity of the power source which can be mounted in the motorcycle 1 can be increased.

In this embodiment, the plurality of batteries 41 is bundled together to be integrated by the package 42. Thus, the attachment and detachment of the batteries 41 is facilitated. Furthermore, it is possible to prevent collision of the batteries 41 with each other.

Still further, in this embodiment, the battery assembly 40 is housed in the cross member 14c while being housed in the shock absorber 43. Therefore, it is possible to prevent collision of the battery assembly 40 with the cross member 14c.

The cross member 14c is attached to the portions of the main members 14a, 14b that extend obliquely downward to the rear. Thus, the cross member 14c and the internal space 14d thereof are generally in the shape of a parallelogram in the side view. Accordingly, high-density mounting of the batteries 41 is made possible by arranging the plurality of generally cylindrical batteries 41 in a matrix or zigzag in the side view. For example, compared to a case where the generally cylindrical batteries 41 are mounted in the generally rectangular internal space in the side view, the batteries 41 can be densely mounted. Therefore, the capacity of the power source which can be mounted in the motorcycle 1 can be increased.

The motorcycle according to the present invention may be an off-road vehicle or a moped.

The above embodiment described an example that the battery was used as a power source. However, the present invention does not limit the power source to the battery. The power source may be a condenser, for example.

The above embodiment described the motorcycle 1 equipped with the engine as a driving source. However, the present invention does not limit the driving source to an engine. The driving source may be an electric motor.

The above embodiment described an example that the plurality of batteries 41 was integrated by the package 42. However, in the present invention, a method to integrate the plurality of batteries 41 is not limited to this method. For example, the plurality of batteries 41 may be integrated by being molded with molding resin.

### Description of Reference Numerals

- 1:: motorcycle10: body frame
- 11:: steering head pipe
- 14a:: right-side main member (main member)
- 14b:: left-side main member (main member)
- 14c:: cross member
- 14d:: internal space
- 40:: battery assembly (power source assembly)
- 41:: battery (power source)

## Claims

1. A body frame (10) for a motorcycle (1) comprising:
a steering head pipe (11);
a pair of right and left main members (14a, 14b) extending rearward from the steering head pipe (11); and
a cross member (14c) for connecting the pair of right and left main members (14a, 14b), the cross member (14c) being formed with an internal space (14d) for mounting a power source (41), wherein each of the main members (14a, 14b) extends obliquely downward to the rear from the steering head pipe (11)
**characterized in that** the cross member (14c) is generally formed in a shape of a parallelogram that extends obliquely downward to the rear in a side view, so that the cross member (14c) follows the main members (14a, 14b) in the side view.

2. A motorcycle (1) including the body frame (10) according to Claim 1.

3. The motorcycle (1) according to claim 2, further comprising
a power source assembly (40) housed in the internal space (14d) of the cross member (14c) and having a plurality of cylindrical power sources (41).

4. The motorcycle (1) according to Claim 3, wherein
the plurality of power sources (41) is arranged in a matrix in the side view.

5. The motorcycle (1) according to Claim 4, wherein
the plurality of power sources (41) is arranged in a zigzag in the side view.

6. The motorcycle (1) according to any one of Claims 2 to 5, wherein
the power source (41) is either a battery or a capacitor.

## Patentansprüche

1. Ein Körperrahmen (10) für ein Motorrad, der folgende Merkmale aufweist:
ein Lenkkopfrohr (11);
ein Paar von rechten und linken Hauptbaugliedern (14a, 14b), die sich von dem Lenkkopfrohr (11) nach hinten erstrecken; und
ein Querbauglied (14c) zum Verbinden des Paars von rechten und linken Hauptbaugliedem (14a, 14b), wobei das Querbauglied (14c) mit einem Innenraum (14d) gebildet ist zum Befestigen einer Leistungsquelle (41), wobei sich jedes der Hauptbauglieder (14a, 14b) von dem Lenkkopfrohr (11) schräg nach unten zur Rückseite erstreckt,
**dadurch gekennzeichnet, dass** das Querbauglied (14c) allgemein in einer Form eines Parallelogramms gebildet ist, das sich in einer Seitenansicht schräg nach unten zur Rückseite erstreckt, so dass das Querbauglied (14c) in der Seitenansicht den Hauptgliedern (14a, 14b) folgt.

2. Ein Motorrad (1), das den Körperrahmen (10) gemäß Anspruch 1 umfasst.

3. Das Motorrad (1) gemäß Anspruch 2, das ferner folgendes Merkmal aufweist:
eine Leistungsquellenanordnung (40), die in dem Innenraum (14d) des Querbauglieds (14c) untergebracht ist und eine Mehrzahl von zylindrischen Leistungsquellen (41) aufweist.

4. Das Motorrad (1) gemäß Anspruch 3, bei dem
die Mehrzahl von Leistungsquellen (41) in der Seitenansicht in einer Matrix angeordnet ist.

5. Das Motorrad (1) gemäß Anspruch 4, bei dem
die Mehrzahl von Leistungsquellen (41) in der Seitenansicht im Zick-Zack angeordnet ist.

6. Das Motorrad (1) gemäß einem der Ansprüche 2 bis 5, bei dem die Leistungsquelle (41) entweder eine Batterie oder ein Kondensator ist.

## Revendications

1. Cadre de châssis (10) pour une motocyclette (1), comprenant:
un tube principal de direction (11);
une paire d'éléments principaux droit et gauche (14a, 14b) s'étendant vers l'arrière depuis le tube principal de direction (11); et
un élément transversal (14c) destiné à connecter la paire d'éléments principaux droit et gauche (14a, 14b), l'élément transversal (14c) étant formé avec un espace intérieur (14d) destiné au montage d'une source de courant (41), où chacun des éléments principaux (14a, 14b) s'étend obliquement vers le bas et vers l'arrière depuis le tube principal de direction (11),
**caractérisé par le fait que** l'élément transversal (14c) est généralement formé en forme de parallélogramme qui s'étend obliquement vers le bas et vers l'arrière en vue de côté, de sorte que l'élément transversal (14c) suive les éléments principaux (14a, 14b) en vue de côté.

2. Motocyclette (1) comportant le cadre de châssis (10) selon la revendication 1.

3. Motocyclette (1) selon la revendication 2, comprenant par ailleurs
un ensemble de source de courant (40) logé dans l'espace intérieur (14d) de l'élément transversal (14c) et présentant une pluralité de sources de courant cylindriques (41).

4. Motocyclette (1) selon la revendication 3, dans laquelle
la pluralité de sources de courant (41) est disposée selon une matrice en vue de côté.

5. Motocyclette (1) selon la revendication 4, dans laquelle
la pluralité de sources de courant (41) est disposée en zigzag en vue de côté,

6. Motocyclette (1) selon l'une quelconque des revendications 2 à 5, dans laquelle
la source de courant (41) est soit une batterie, soit un condensateur.
